# EUROPÄISCHE PATENTSCHRIFT

(11) **EP 3 003 613 B1**
(45) Veröffentlichungstag und Bekanntmachung des Hinweises auf die Patenterteilung: **13.05.2020**
(21) Anmeldenummer: 14722129.5
(22) Anmeldetag: 22.04.2014
(51) Int. Cl.: B23B 31/02

(54) **WERKZEUGSPANNSYSTEM**
TOOL CLAMPING SYSTEM
SYSTEME DE SERRAGE D'OUTIL

(30) Priorität: 06.06.2013 DE 102013105829
(43) Veröffentlichungstag der Anmeldung: 13.04.2016
(73) Patentinhaber: Bilz Werkzeugfabrik GmbH & Co. KG, 73760 Ostfildern (DE)
(72) Erfinder: FRONIUS, Jürgen, 74399 Walheim (DE)
(74) Vertreter: Witte, Weller & Partner Patentanwälte mbB
(86) Internationale Anmeldenummer: PCT/EP2014/058060
(87) Internationale Veröffentlichungsnummer: WO 2014/195057

(56) Entgegenhaltungen:
- DE-A1-102008 009 340
- DE-A1-102009 027 764
- DE-C1- 10 059 193
- US-A- 4 890 306
- US-A1- 2009 234 490
- US-A1- 2010 262 308

## Beschreibung

Die Erfindung betrifft ein Werkzeugspannsystem mit einem rotierend antreibbaren Werkzeughalter zum Spannen eines Werkzeugs gemäß dem Oberbegriff des Anspruchs 1.

Derartige Werkzeugspannsysteme sind seit Jahrzehnten bekannt und werden in vielfältiger Weise bei der spanenden Bearbeitung von Werkstücken eingesetzt.

Seit einigen Jahren wird bei manchen Bearbeitungszentren mit rotierendem Werkzeug gefordert, dass neben den üblichen spanenden Werkzeugen zum Teil auch messtechnische Anwendungen bzw. Überwachungen des Werkzeugs realisiert werden. Hierbei handelt es sich im Allgemeinen um Applikationen, bei denen ein Messsystem, meist beruhend auf elektromechanischen Prinzipien, auf eine Spindelschnittstelle montiert wird. So soll einerseits die Verbindung und Führung durch die Maschinenkinematik sichergestellt werden und andererseits die Messwerterfassung und -übertragung an die Steuerung ermöglicht werden. Hierbei muss die Energieversorgung des Messsystems meist durch Batterien oder Akkumulatoren realisiert werden. Die Datenübertragung zu einer festen Auswertungsstation findet standardgemäß über Infrarotsender und - Empfänger statt, zunehmend auch über Funk.

Jedoch ist die Versorgung mittels Batterie oder Akkumulator meist eine einschränkende Größe, da die Sicherstellung der Energieversorgung so zu zusätzlichem Wartungs- und Betreuungsaufwand führt. Auch die existierenden berührungslosen induktiven Energieübertrager, die prinzipiell eine Energieversorgung ohne galvanische Kontakte oder Batterie ermöglichen, stellen einen erheblichen Eingriff in die Struktur der rotierenden Elemente dar. Die Ladestation ist normalerweise außerhalb der Werkzeugmaschine angesiedelt, oder es muss die betreffende Applikation zum Batteriewechsel aus der Werkzeugmaschine entnommen werden. Darüber hinaus stellt die Energieversorgung bei Sensorsystemen oder ggf. auch aktiv arbeitenden, aktorischen Systemen, generell eine Einschränkung dar. Daran und an der extrem rauen Umgebung im Arbeitsraum von Werkzeugmaschinen scheitert grundsätzlich die Ausstattung von an sich bekannten Werkzeugen mit zusätzlicher Intelligenz.

Vor diesem Hintergrund besteht ein Bedarf an Werkzeugüberwachungssystemen, die bei Werkzeugmaschinen ohne externe Energieversorgung arbeiten können.

Aus der DE 10 2009 027 764 A1 ist eine Werkzeugmaschine mit einem Spannfutter bekannt, die eine mechanische Energiewandeleinrichtung zur Umwandlung von Verformungsenergie mittels eines Piezoelementes in elektrische Energie aufweist. Das Spannfutter weist einen elektrischen Aktuator zur Arretierung eines Werkzeugs auf, der beim Drehen einer Griffhülse mittels des Piezoelementes aktiviert wird.

Aus der DE 10 2008 009 340 A1 ist ferner eine Vorrichtung zur Erfassung und Anzeige einer Störung eines Werkzeugs mit Hilfe eines vom Werkzeug übertragbaren Funksignals bekannt. Zur Energieversorgung ist ein Piezoelement bekannt, mit Hilfe dessen im Falle einer Störung die für einen Sender erforderliche Spannung übertragbar ist.

Der Erfindung liegt somit die Aufgabe zugrunde, ein Werkzeugspannsystem mit einem rotierend antreibbaren Werkzeughalter zur Spannung eines Werkzeugs zu schaffen, das eine Energieversorgung zur Erzeugung von elektrischer Energie ohne eine externe Spannungsversorgung in Form einer Batterie oder eines Akkumulators erlaubt und das außerdem eine besonders empfindliche Überwachung von Betriebsparametern des Werkzeugspannsystems erlaubt.

Diese Aufgabe wird erfindungsgemäß bei einem Werkzeugspannsystem mit einem rotierend antreibbaren Werkzeughalter zur Spannung eines Werkzeugs durch eine Einrichtung zur Erzeugung von elektrischer Energie aus mechanischer oder thermischer Energie des Werkzeugspannsystems gelöst, die mindestens ein Piezoelement zur Erzeugung einer Spannung aus mechanischer Schwingungsenergie des rotierenden Werkzeugspannsystems aufweist, dessen Ausgangssignal als Sensorsignal zur Überwachung eines Betriebsparameters des Werkzeugspannsystems verwendet wird.

Die Aufgabe der Erfindung wird auf diese Weise vollkommen gelöst.

Erfindungsgemäß wird nämlich die ohnehin beim Werkzeugspannsystem vorhandene mechanische Energie genutzt, um hieraus elektrische Energie zu erzeugen. Das Piezoelement wird erfindungsgemäß zur Erzeugung einer Spannung aus mechanischer Schwingungsenergie des rotierenden Werkzeugspannsystems genutzt, wobei das Ausgangssignal des mindestens eines Piezoelementes als Sensorsignal zur Überwachung eines Betriebsparameters des Werkzeugspannsystems verwendet wird.

Da der Sollverlauf des Zerspanungsprozesses selbst in der Regel ausreichend gut bekannt ist, kann so das periodisch veränderte Ausgangssignal des Piezoelementes selbst zur Überwachung des Werkzeugspannsystems herangezogen werden.

Dies ermöglicht eine besonders sensible Überwachung des Werkzeugspannsystems, da sich auf diese Weise eine besonders hohe Empfindlichkeit ergibt.

Da jedes rotierende Werkzeugspannsystem mechanische Schwingungsenergie enthält, kann diese auf einfache Weise mithilfe mindestens eines Piezoelementes ausgenutzt werden, um eine Spannung aus der mechanischen Schwingungsenergie zu gewinnen. Prozessbedingt treten bei allen spanenden Werkzeugen im Betrieb Schwingungen auf. Größtenteils sind die Schwingungen unerwünscht, teilweise haben sie jedoch positive Effekte auf den Zerspanungsprozess, wie zum Beispiel eine Verbesserung des Spanbruchs. Unabhängig davon sind die Ursachen für die mechanischen Schwingungen jedoch nicht restlos zu beseitigen. Selbst wenn es nur um das Schnittrauschen symmetrischer Schneiden in homogenem Material geht, so gibt es dennoch genügend Werkstoffinhomogenitäten, die eine Variation der Prozesskräfte zur Folge haben. Bei asymmetrischen Werkzeugen, wie etwa einschneidigen Kurzlochbohrern, sind diese Schwingungen unvermeidlich. Ebenso verursacht jeder Schneidenein- oder austritt eine Schnittkraftvariation, die entweder im Werkzeug selbst oder in der Kombination Werkzeug - Spindel Schwingungen verursacht.

Unabhängig von der Variation der mechanischen Schwingungsenergie kann diese erfindungsgemäß zur Erzeugung einer Spannung mithilfe mindestens eines Piezoelementes genutzt werden.

Vorzugsweise wird hierbei das mindestens eine Piezoelement im Werkzeug in einem Bereich zwischen einer Schneide oder einem Schneidenträger und einem Schaft des Werkzeugs angeordnet.

Hierbei ist das mindestens eine Piezoelement vorzugsweise zur Erzeugung einer Spannung aus mechanischer Schwingungsenergie des Werkzeugspannsystems, insbesondere in Form von periodisch veränderter Torsion des rotierenden Werkzeugs, ausgebildet.

Dabei wird das mindestens eine Piezoelement sinnvollerweise im Werkzeug derart integriert, dass eine Torsionsbeanspruchung des Werkzeugs zu einer Druckbeanspruchung des mindestens eines Piezoelements führt.

Bekanntlich sollen Piezoelemente im Wesentlichen auf Druck beansprucht werden, müssen also in geeigneter Form eingebaut werden, um in Abhängigkeit von der auftretenden Beanspruchungsart eine Druckspannung an den Piezoelementen zu erzeugen. Um hierzu beide Halbperioden der mechanischen Schwingung nutzen zu können, ist ggf. eine geeignete Vorspannung beim Einbau der jeweiligen Piezoelemente zu berücksichtigen. Die Fähigkeit, Zugbelastungen aufzunehmen, ist bei Piezoelementen sehr eingeschränkt.

In weiter vorteilhafter Ausgestaltung der Erfindung ist am Werkzeug eine bewegliche Schnittstelle, insbesondere in Form eines Festkörpergelenks, vorgesehen, und zwar zwischen der Schneide oder dem Schneidenträger und dem Werkzeugschaft. Hierbei wird das mindestens eine Piezoelement derart integriert, dass sich eine Beanspruchung auf Druck ergibt.

In weiterer Ausgestaltung der Erfindung ist das mindestens eine Piezoelement im Werkzeugschaft aufgenommen, wobei das Piezoelement durch mindestens einen Schlitz im Werkzeugschaft in den Lastfluss zwischen Schneide und Spindel eingebracht werden kann. Grundsätzlich ist es sinnvoll, die Piezoelemente möglichst ohne Einfluss auf die mechanischen Grundeigenschaften in den Lastfluss zwischen Prozesskräften und Antrieb unterzubringen. Hierbei ist es sinnvoll, die Ausgestaltung der Piezoelemente so zu nutzen, dass in Hauptschwingungsrichtung die Hauptwirkrichtung des Piezoelementes liegt, unabhängig davon, ob die Druckerzeugung durch Torsion, Biegung oder eine sonstige Beanspruchung der mechanischen Elemente erzeugt wird.

In diesem Falle lässt sich bei einem derartigen Einbau des Piezoelementes eine Druckbeanspruchung infolge von Torsionen innerhalb des Werkzeugschafts erzielen, was zu einer pulsierenden Ausgangsspannung des Piezoelementes (pulsierende Gleichspannung) führt.

Das Werkzeug kann hierbei als Bohrwerkzeug, insbesondere als Kurziochbohrer, als Fräswerkzeug oder Sägewerkzeug ausgebildet sein.

Bei einem Bohrwerkzeug ergibt sich eine annähernd sinusförmige periodische Veränderung der Ausgangsspannung des Piezoelementes im Betrieb. Bei einem Fräs- oder Sägewerkzeug verändert sich die gleichzeitig im Einsatz befindliche Zahl der Schneiden periodisch. Dies führt zu einer rechteckförmig variierenden Variation der Schnittkraft und wiederum zu einem annähernd sinusförmig pulsierenden Ausgangssignal des mindestens einen Piezoelementes.

Gemäß einer weiteren Ausgestaltung der Erfindung ist das mindestens eine Piezoelement mit mindestens einer Induktivität und vorzugsweise mindestens einem Kondensator derart miteinander verschaltet, dass sich ein Schwingkreis ergibt.

Auf diese Weise kann die periodisch veränderte Ausgangsspannung des mindestens eines Piezoelementes vorteilhaft ausgenutzt werden, um entweder mittels des Schwingkreises eine drahtlose Übertragung (zum Beispiel mit HF-Unterstützung) oder mittels induktiver Kopplung oder auf eine andere Weise zu ermöglichen.

Hierbei wird vorzugsweise die Frequenz des Schwingkreises an die Frequenz der Hauptschwingung des Werkzeugspannsystems angepasst.

Gemäß einer weiteren Ausgestaltung der Erfindung wird die Phasenlage des Schwingkreises mittels eines Verzögerungsgliedes, etwa in Form eines Kondensators, derart ausgelegt, dass sich zwischen der mechanischen Schwingung und der Frequenz des Schwingkreises eine Phasenverschiebung von annähernd 180° ergibt.

Auf diese Weise wird zwischen der den Piezoeffekt verursachenden Kraftpulsation und der Rückkopplung eine Phasenlage von annähernd 180° erreicht, was zu einem mechanischen Dämpfungseffekt auf die Schwingung führt. Auf diese Weise kann das mindestens eine Piezoelement zur mechanischen Versteifung bzw. zu einem Tilgereffekt genutzt werden, wodurch die mechanische Primärschwingung gedämpft wird.

Zur frequenzmäßigen Abstimmung kann hierbei insbesondere eine einstellbare Induktivität und/oder ein einstellbarer Kondensator benutzt werden.

Gemäß einer weiteren Ausgestaltung der Erfindung wird eine Mehrzahl von Piezoelementen parallel miteinander verschaltet, wobei die Anordnung der Piezoelemente am Werkzeug vorzugsweise so getroffen ist, dass an den Aufnahmepunkten der Piezoelemente keine Phasenverschiebungen der Hauptschwingungen des Werkzeugspannsystems auftreten.

Auf diese Weise werden Ausgleichsströme zwischen den einzelnen Piezoelementen reduziert bzw. vermieden.

In alternativer Ausführung können die Piezoelemente auch seriell miteinander verschaltet werden, wobei die Anordnung der Piezoelemente wiederum am Werkzeug vorzugsweise so getroffen ist, dass an den Aufnahmepunkten der Piezoelemente keine Phasenverschiebungen der Hauptschwingungen des Werkzeugspannsystems auftreten.

Wegen der hohen hierbei auftretenden Spannungen kann es bei der seriellen Verschaltung jedoch sinnvoll sein, dass eine Ausgangsspannung der Schaltung mittels eines Spannungswandlers auf eine niedrigere Ausgangsspannung, vorzugsweise von höchstens etwa 50 V, reduziert wird.

Des Weiteren können Multilayerpiezoelemente in Form von Parallelschaltungen mit anderen Multilayerelementen seriell verschaltet werden, die an unterschiedlichen Positionen des Werkzeugs angeordnet sind.

Dies hat den Vorteil, gegen Kraftdifferenzen weitgehend unempfindlich zu sein und gleichzeitig eine gute Spannungsausbeute zu ermöglichen.

Gemäß einer weiteren Ausgestaltung der Erfindung ist das Ausgangssignal des mindestens eines Piezoelementes einer Einrichtung zur Spannungsaufbereitung zugeführt, die eine Einrichtung zur Erzeugung eines HF-Trägersignals speist, das mit einem Modulator zum Modulieren eines HF-Trägersignals mit einem Nutzsignal gekoppelt ist.

Auf diese Weise kann mit einer derartigen Schaltung eine unmittelbare Übertragung des Nutzsignals auf drahtlose Weise erfolgen.

Als Nutzsignal kann hierbei das Ausgangssignal des mindestens einen Piezoelementes selbst, also das Rohsignal, verwendet werden, um hiermit eine möglichst verlustarme Prozessüberwachung zu ermöglichen.

In alternativer Ausgestaltung der Erfindung kann auch eine Sensoreinrichtung im Werkzeug aufgenommen sein, die von der Einrichtung zur Spannungsaufbereitung gespeist wird und deren Ausgangssignal vorzugsweise dem Modulator als Nutzsignal zugeführt ist.

Soweit die Spannungsausbeute ausreichend groß ist, können auf diese Weise diverse Sensoren zur Prozessüberwachung unmittelbar in das Werkzeug integriert werden.

In zweckmäßiger Weiterbildung der zuvor beschriebenen Ausführungen ist der Modulator vorzugsweise zur drahtlosen Übertragung des modulierten HF-Trägersignals an eine stationäre Auswerteeinheit mit einer Sendeeinrichtung gekoppelt.

In der stationären Auswerteeinheit wird dann das HF-Signal mittels einer geeigneten Antenne aufgefangen und kann mittels eines Filters und weiteren in der HF-Technik grundsätzlich bekannten Komponenten genutzt werden, um das Nutzsignal zu extrahieren und in geeigneter Weise weiterzuverarbeiten.

Gemäß einer weiteren Ausgestaltung der Erfindung ist eine Ausgangsspannung der verschalteten Piezoelemente einer Einrichtung zur Spannungsaufbereitung zugeführt, die vorzugsweise mindestens einen Kondensator, und vorzugsweise eine Einrichtung zur Spannungsstabilisierung, etwa in Form einer Zenerdiode, aufweist.

Auf diese Weise kann ein gewünschter Verbraucher mit einer geglätteten bzw. stabilisierten Spannung versorgt werden.

Es kann sich hierbei etwa um eine Sensoreinrichtung handeln, die zur Überwachung eines Betriebsparameters des Werkzeugspannsystems verwendet wird.

Es ist denkbar, beliebige Betriebsparameter zu überwachen, wozu insbesondere die Temperatur des Werkzeugs, die Temperatur des Kühlmittels, die Torsion des Werkzeugs, die Schnittkraft, die Beschleunigung des Werkzeugs und die Schneidenintegrität gehören.

Gemäß einer weiteren Ausgestaltung der Erfindung ist die Sensoreinrichtung im Werkzeug integriert und mit einer Einrichtung zur drahtlosen Übertragung eines Signals an eine stationäre Auswerteschaltung gekoppelt.

Hierzu kann das Werkzeug mit dem Werkzeughalter über eine elektrische Schnittstelle zur Übertragung eines elektrischen Signals gekoppelt sein. Die Einrichtung zur drahtlosen Übertragung eines Signals kann dann vorzugsweise aus Platzgründen im Werkzeughalter vorgesehen sein.

Grundsätzlich kann es auch aus Platzgründen empfehlenswert sein, im Bereich des Werkzeugs lediglich das mindestens eine Piezoelement und ggf. noch die Einrichtung zur Spannungsaufbereitung (wie etwa Kondensator und ggf. Spannungsstabilisator) vorzusehen, während alle weiteren Komponenten im Bereich des Werkzeughalters vorgesehen sind.

Gemäß einer weiteren Ausführung der Erfindung wird das Ausgangssignal des mindestens einen Piezoelements an eine Steuerung der Antriebsmaschine als Regelgröße rückgekoppelt.

Das rückgekoppelte Signal kann vorteilhaft zur Prozessadaption verwendet werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Figur 1: eine schematische Darstellung der Ausgangsspannung eines Piezoelementes in Abhängigkeit von der Zeit beim Anfahren des rotierenden Werkzeugspannsystems im Falle eines Bohrwerkzeugs;
- Figur 2: ein grundsätzliches Lastmoment und eine Ausgangsspannung eines Piezoelementes in Abhängigkeit von der Zeit bei einem eingefahrenen Prozess in Form eines Fräs- oder Sägewerkzeuges;
- Figur 3: ein grundsätzliches Lastmoment und eine Ausgangsspannung in Abhängigkeit von der Zeit bei einem eingefahrenen Prozess im Falle eines Bohrwerkzeuges;
- Figur 4: eine schematische Darstellung einer mechanischen Schnittstelle im Schaft eines Bohr- oder Fräswerkzeuges;
- Figur 5: eine Seitenansicht eines Kurzlochbohrer-Bohrwerkzeuges mit schematisch dargestellten Einbaupositionen für Piezoelemente;
- Figur 6: eine Aufsicht des Werkzeugs gemäß Figur 5;
- Figur 7: eine Parallelschaltung von drei Piezoelementen, die mit einer Induktivität, einem Kondensator und einer Zenerdiode zu einem Schwingkreis verschaltet sind;
- Figur 8: eine vereinfachte schematische Darstellung einer elektrischen Schnittstelle zwischen dem Schaftende eines Werkzeugs und einem Werkzeughalter;
- Figur 9: eine abgewandelte Ausführung mit einer seriellen Verschaltung von Piezoelementen sowie mit einem HF-Generator mit einem Modulator und einem Sender und einem separaten Sensor, dessen Ausgangsspannung auf das HF-Trägersignal aufmoduliert wird;
- Figur 10: eine weitere Ausführung einer erfindungsgemäßen Schaltung, bei dem die Piezoelemente parallel miteinander verschaltet sind, einer Einrichtung zur Spannungsaufbereitung zugeführt sind, von der ein HF-Generator und ein Modulator gespeist werden, wobei das primäre Ausgangssignal der Piezosensoren dem Modulator als Nutzsignal zugeführt ist, das auf das HF-Trägersignal aufmoduliert wird und schließlich über einen Sender zu einer stationären Auswerteschaltung übertragen wird.

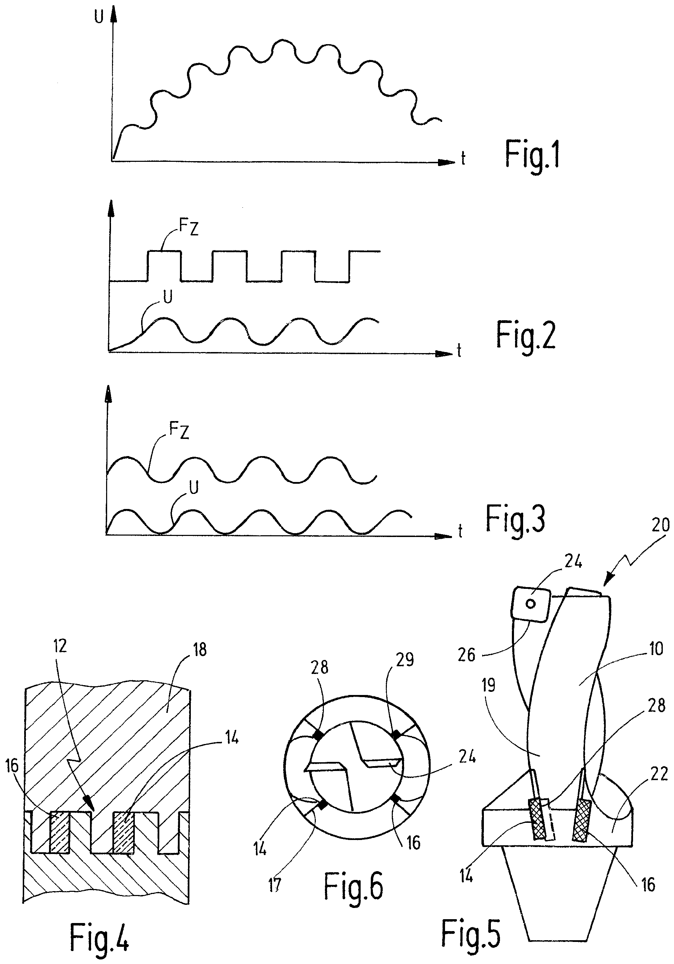

In Fig. 1 ist die Ausgangsspannung eines Piezoelementes, das im Schaftbereich eines Kurzlochbohrers eingebaut ist, schematisch dargestellt, und zwar während des Anfahrens des Bohrers, also in einem noch nicht eingefahrenen, stabilen Zustand.

Es zeigt sich ausgehend vom Ruhestand ein annähernd sinusförmig periodisch verändertes, zunächst langsam ansteigendes Ausgangssignal, das dann im Laufe der Zeit wieder abfällt.

In den Fig. 2 und 3 sind schematisch die Schnittkraftmomente und die zugehörigen Ausgangssignale eines Piezoelementes in einem Fräswerkzeug bzw. einem Bohrwerkzeug dargestellt, wobei das Piezoelement am Schaft des Werkzeuges derart eingebaut ist, dass eine Torsionsbeanspruchung des Werkzeugs zu einer Druckbeanspruchung des Piezoelements führt.

Im Falle eines Fräswerkzeuges (oder Sägewerkzeuges) führt die periodisch sich verändernde Anzahl der im Eingriff befindlichen Schneiden zu einem annähernden Rechtecksignal. Das Piezoelement liefert demgemäß eine annähernd sinusförmig pulsierende Gleichspannung.

Im Falle eines Bohrers ergibt sich gemäß Fig. 3 beim eingefahrenen Zustand eine annähernd sinusförmige Schnittkraftvariation, was beim Piezoelement wiederum zu einer annähernd sinusförmigen pulsierenden Gleichspannung führt.

Piezoelemente können also grundsätzlich genutzt werden, um die in einem rotierenden Schneidwerkzeug auftretenden Spannungspulsationen auszunutzen, um einerseits eine unabhängige Spannungsversorgung im Bereich des Werkzeugs zu ermöglichen und um andererseits eine Prozessüberwachung zu ermöglichen, sei es durch eine direkte Nutzung des erzeugten Spannungssignals oder sei es durch einen Sensor, der unter Ausnutzung der Piezospannung gespeist wird.

In Fig. 4 ist schematisch dargestellt, wie eine Integration von Piezosensoren in den Schaft 19 eines Werkzeugs 10 erfolgen kann. Der Werkzeugschaft 19 ist durch eine mechanische Schnittstelle 12 prinzipiell in Form eines Festkörpergelenks unterbrochen, wobei die Piezoelemente 14, 16 derart eingebaut sind, dass die vom angetriebenen Werkzeugkopf 18 ausgehende Torsion über das Festkörpergelenk 12 auf die Piezoelemente 14, 16 übertragen wird, die hierbei auf Druck beansprucht werden und über den Werkzeugkopf 18 angetrieben werden.

In Fig. 5 ist eine Ansicht eines erfindungsgemäßen Werkzeugspannsystems vereinfacht dargestellt und insgesamt mit der Ziffer 20 bezeichnet. Hierbei ist das Werkzeug 10 als Kurzlochbohrer ausgeführt und in einem Werkzeughalter (HSK) 22 eingespannt.

Das Werkzeug 10 weist zwei Schneiden 24 auf, die am oberen Ende des Werkzeugs 10 an Schneidenträgern 26 angeschraubt sind.

Die Piezoelemente sind im Bereich des dem Werkzeughalter 22 zugewandten Endes des Schaftes 19 angeordnet, wie schematisch durch die Piezoelemente 14, 16, 28 angedeutet ist (in der Darstellung gemäß Fig. 5 sind lediglich zwei Piezoelemente 14, 16 erkennbar und ein drittes Piezoelement 28 gestrichelt angedeutet). Zwischen dem antreibenden Teil des Werkzeugschaftes 19 und dem kraftaufnehmenden Teil des Werkzeugschaftes 19, in dem die Piezoelemente 14, 16, 28 und 29 (vgl. Aufsicht gemäß Fig. 6) angeordnet sind, sind gemäß Fig. 6 Schlitze 17 angebracht, um ausgehend vom antreibenden Teil des Werkzeugschaftes 19 eine gewisse Torsion in eine Druckbeanspruchung der Piezoelemente 14, 16, 28, 29 umzusetzen.

Aus der Aufsicht gemäß Fig. 6 ist zu ersehen, dass die Schneiden 24 des als Kurzlochbohrer ausgeführten Werkzeugs 10 wie im Stand der Technik bekannt asymmetrisch von der Mittelachse aus zu einer Seite hin versetzt sind.

Vorzugsweise werden die Piezoelemente 14, 16, 28, 29 derart angeordnet, dass sich keine Phasenverschiebungen der Schwingungslasten zueinander ergeben, da diese zu Ausgleichsströmen zwischen den Piezoelementen 14, 16, 28, 29 führen würden.

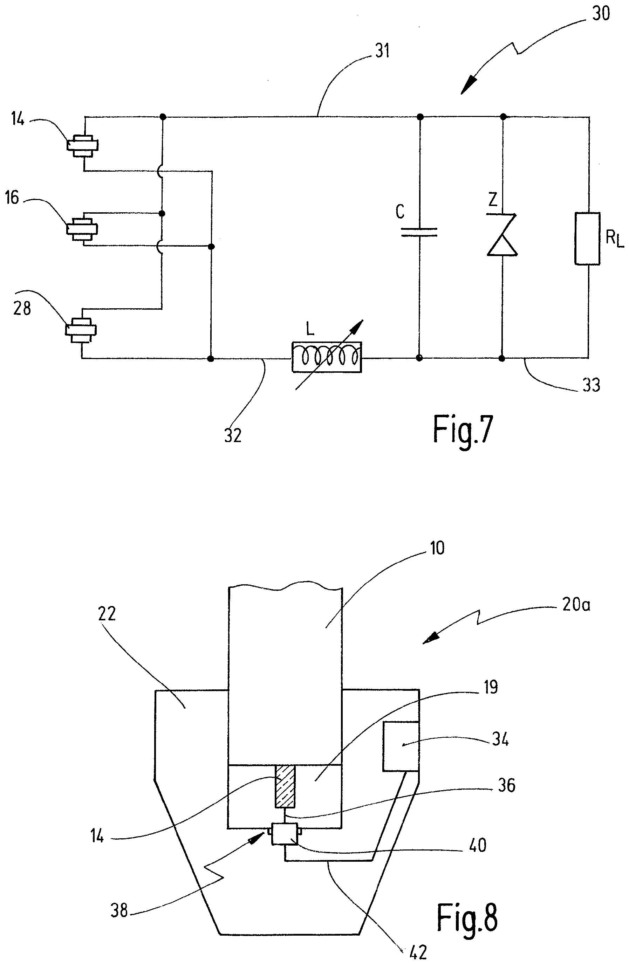

In Fig. 7 ist ein erste denkbare Verschaltung von mehreren Piezoelementen dargestellt, wobei die verschiedenen Piezoelemente parallel geschaltet sind und zu einem Schwingkreis gekoppelt sind.

Die Schaltung 30 gemäß Fig. 7 zeigt drei Piezoelemente 14, 16, 28, die um eine beliebige Anzahl erweitert werden könnten, die miteinander parallel geschaltet sind. Die Ausgangsspannung der Piezoelemente steht einerseits mit einem Kondensator C und einer Zenerdiode Z über eine Leitung 31 in Verbindung, während der andere Pol der Ausgangsspannung über eine Leitung 32 mit einer abstimmbaren Induktivität L verbunden ist, die mit dem anderen Pol des Kondensators C und der Zenerdiode Z gekoppelt ist.

Somit ergibt sich ein abstimmbarer Schwingkreis, an den eine Last R_{L} angekoppelt ist.

Ein derartiger Schwingkreis kann vorzugsweise mit einer Frequenz an die Frequenz der Hauptschwingungen des Werkzeugspannsystems 20 angepasst werden. Hierzu kann die einstellbare Induktivität L und/oder alternativ eine einstellbare Kapazität C verwendet werden. Der Schwingkreis kann dazu benutzt werden, um die Schwingungen mit einem externen Schwingkreis induktiv oder kapazitiv zu koppeln, um somit eine drahtlose Übertragung an den externen Schwingkreis zu ermöglichen. Ferner kann die Phasenlage des Schwingkreises mittels des einstellbaren Verzögerungsgliedes, also etwa der einstellbaren Induktivität L oder einer einstellbaren Kapazität C, derart angepasst werden, dass sich zwischen der mechanischen Schwingung und der Frequenz des Schwingkreises eine Phasenverschiebung von etwa 180° ergibt.

In diesem Fall wirkt der Schwingkreis der mechanischen Schwingung entgegen und führt somit zu einer Versteifung / Dämpfung des Systems (Tilgerwirkung).

Anstelle einer parallelen Verschaltung der Piezoelemente 14, 16, 28 bzw. 29 ist grundsätzlich auch eine serielle Verschaltung der Piezoelemente möglich. Allerdings ergeben sich hierbei infolge der relativ hohen Ausgangsspannung der Piezoelemente Spannungen, die je nach Anzahl der Piezoelemente mehrere hundert Volt oder darüber erreichen können. In diesem Fall ist es sinnvoll, die Ausgangsspannung über einen Spannungswandler (Wechselrichter) herabzusetzen und auf eine geeignete Ausgangsspannung von zum Beispiel in der Größenordnung von 50 V zu begrenzen.

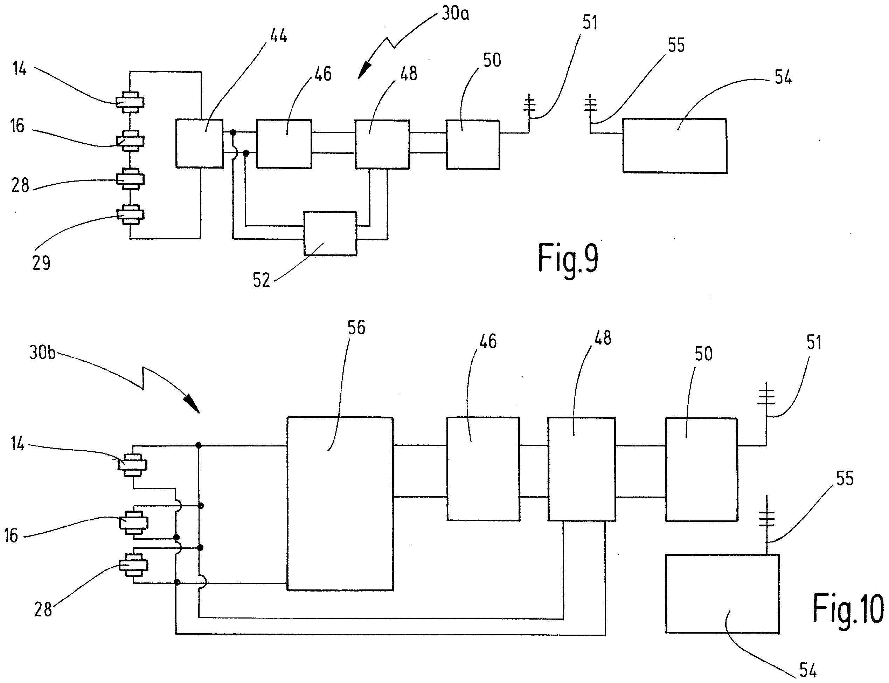

Fig. 9 zeigt eine derartige Schaltung 30a beispielhaft. Hierbei wird die Ausgangsspannung von vier seriell miteinander verschalteten Piezoelementen 14, 16, 28, 29 zunächst über einen Spannungswandler 44 reduziert, von dessen Ausgangsspannung ein HF-Generator 46 versorgt wird, der mit einem Modulator 48 und einem nachfolgenden Sender 50 gekoppelt ist, der die HF-Energie über eine Antenne 51 nach außen abstrahlt. Von der Ausgangsspannung des Spannungswandlers 44 wird ferner ein Sensor 52 versorgt, der im Bereich des Werkzeugkopfs 18 integriert ist. Das Ausgangsignal des Sensors 52 ist dem Modulator 48 zugeführt, um das hochfrequente Trägersignal des HF-Generators mit dem Ausgangsspannung des Sensors 52 zu modulieren.

In einer zugeordneten stationären Auswerteschaltung 54 wird das HF-Signal mittels einer Antenne 55 empfangen und dann mittels grundsätzlich bekannter Schaltungselemente (Filter, Verstärker etc.) verarbeitet, um das Nutzsignal vom Sensor 52 wieder aus dem HF-Signal zu extrahieren und zu verstärken. Die Schaltung 54 kann auch in eine zentrale Maschinensteuerung integriert sein, von der das extrahierte Signal zur Anpassung des Arbeitsprozesses genutzt wird.

Fig. 8 zeigt eine schematische Darstellung einer abgewandelten Ausführung eines Werkzeugspannsystems, das insgesamt mit 20a bezeichnet ist. Hierbei erfolgt die Übertragung des Ausgangssignals vom Piezoelement 14 nicht drahtlos, sondern über eine elektrische Kontaktierung am Ende des Werkzeugschaftes 19, über eine Signalleitung 36 und eine schematisch angedeutete elektrische Schnittstelle 38 auf dem Werkzeughalter 22 (aus Vereinfachungsgründen wurde von der Darstellung eines Kühlmittelkanals abgesehen).

Hierbei wird vorzugsweise eine federnde Übertragung zwecks einer besonders guten Kontaktierung genutzt. Zur Isolierung können geeignete keramische Überzüge im Bereich der einander gegenüberliegenden Flächen verwendet werden. Die Spannung wird über einen Kontaktstift 40 über eine daran angeschlossene Leitung 42 zu einer Auswerteschaltung 34 übertragen, die innerhalb des Werkzeughalters 22 angeordnet ist. Von hier aus kann die weitere Datenübertragung vorzugsweise drahtlos über Funk, RFID oder auf andere Weise erfolgen.

Fig. 10 zeigt eine weitere Abwandlung einer erfindungsgemäßen Schaltung, die insgesamt mit 30b bezeichnet ist.

Hierbei sind die Piezoelemente, von denen beispielhaft drei Piezoelemente 14, 16, 28 dargestellt sind, parallel miteinander verschaltet und dienen zunächst der Versorgung einer Spannungsaufbereitung 56. Hierbei kann es sich beispielsweise wiederum um einen Kondensator gekoppelt mit einer Zenerdiode handeln. Von der so geglätteten und stabilisierten Ausgangsspannung aus der Spannungsaufbereitung 56 wird wiederum ein HF-Generator 46 gespeist, der mit einem Modulator 48 gekoppelt ist, gefolgt von einem Sensor 50 mit einer HF-Antenne 51.

Im Unterschied zur Schaltung gemäß Fig. 9 wird hierbei allerdings kein separater Sensor verwendet, sondern das Ausgangsignal der Piezoelemente 14, 16, 28 wird unmittelbar dem Modulator 48 zugeführt, von dem es aufbereitet und auf das HF-Trägersignal als Nutzsignal aufmoduliert wird. Bei geeigneter Anordnung kann auch nur ein einzelnes Piezosignal zur Prozesserfassung genutzt werden oder die Signale mehrerer unterschiedlich angeordneter Piezoelemente getrennt übertragen und aus den Unterschieden z.B. in der Amplitude Rückschlüsse auf den Prozess getroffen werden.

Diese Schaltung ist demzufolge deutlich verlustärmer als die zuvor anhand von Fig. 9 beschriebene Schaltung und ermöglicht eine unmittelbare Übertragung des von den Piezoelementen 14, 16, 28 aufgenommenen Signals als Folge der mechanischen Schwingungsenergie des Werkzeugspannsystems.

Ist der Prozess der Werkstückbearbeitung hinreichend bekannt, so können durch die Überwachung dieses Signals Rückschlüsse auf die Integrität des ArbeitsProzesses geschlossen werden, also zum Beispiel ein Ausfall oder eine Beschädigung der Schneiden erkannt werden, da dies unmittelbar zu einem veränderten Ausgangssignal der Piezoelemente 14, 16, 28 führen würde.

Es versteht sich, dass es sich bei den zuvor dargestellten Beispielen lediglich um eine kleine Anzahl von beispielhaften Anwendungen handelt, mit denen die Möglichkeiten aufgezeigt werden sollen, die mit der Ausnutzung von Piezoelementen zur Erzeugung von Spannungen aus der mechanischen Schwingungsenergie des Werkzeugspannsystems bestehen.

Grundsätzlich gibt es diverse Möglichkeiten, um das Ausgangssignal der Piezoelemente zur Spannungsversorgung zu verwenden, um das Signal zur Überwachung des Arbeitsprozesses auszuwerten und an ein stationäres System zu übertragen und um einen oder mehrere Sensoren zur Überwachung des Arbeitsprozesses zu speisen.

Es versteht sich schließlich, dass anstelle von hier beschriebenen analogen Schaltungskomponenten selbstverständlich auch digitale Schaltungen verwendet werden können.

## Patentansprüche

1. Werkzeugspannsystem mit einem rotierend antreibbaren Werkzeughalter (22) zum Spannen eines Werkzeugs (10), mit einer Einrichtung (14, 16, 28, 29) zur Erzeugung von elektrischer Energie aus mechanischer oder thermischer Energie des Werkzeugspannsystems (20), die mindestens ein Piezoelement (14, 16, 28, 29) zur Erzeugung einer Spannung aus mechanischer Schwingungsenergie des rotierenden Werkzeugspannsystems (20) aufweist, **dadurch gekennzeichnet, dass** das Ausgangssignal des mindestens einen Piezoelementes (14, 16, 28, 29) als Sensorsignal zur Überwachung eines Betriebsparameters des Werkzeugspannsystems (20) verwendet wird.

2. Werkzeugspannsystem nach Anspruch 1, **dadurch gekennzeichnet, dass** das mindestens eine Piezoelement (14, 16, 28, 29) im Werkzeug in einem Bereich zwischen einer Schneide (24) oder einem Schneidenträger (26) und einem Schaft (19) des Werkzeugs (10) angeordnet ist.

3. Werkzeugspannsystem nach Anspruch 1 oder 2, **dadurch gekennzeichnet, dass** das mindestens eine Piezoelement (14, 16, 28, 29) zur Erzeugung einer Spannung aus mechanischer Schwingungsenergie des Werkzeugspannsystems (20), insbesondere in Form von periodisch veränderter Torsion des Werkzeugs (10) ausgebildet ist.

4. Werkzeugspannsystem nach einem der vorhergehenden Ansprüche, **dadurch gekennzeichnet, dass** das mindestens eine Piezoelement (14, 16, 28, 29) im Werkzeug (10) derart integriert ist, dass eine Torsionsbeanspruchung des Werkzeugs zu einer Druckbeanspruchung des mindestens einen Piezoelements (14, 16, 28, 29) führt.

5. Werkzeugspannsystem nach einem der vorhergehenden Ansprüche, **dadurch gekennzeichnet, dass** das Werkzeug (10) eine bewegliche Schnittstelle (12), insbesondere in Form eines Festkörpergelenks, zwischen der Schneide (24) oder dem Schneidenträger (26) und dem Werkzeugschaft (19) aufweist, in die das mindestens eine Piezoelement (14, 16, 28, 29) derart integriert ist, dass sich eine Beanspruchung auf Druck ergibt.

6. Werkzeugspannsystem nach Anspruch 4 oder 5, **dadurch gekennzeichnet, dass** das mindestens eine Piezoelement (14, 16, 28, 29) im Werkzeugschaft (19) aufgenommen ist, wobei durch mindestens einen Schlitz (17) im Werkzeugschaft (19) die Integration des Piezoelements (14, 16, 28, 29) in den Kraftfluss zwischen der Schneide (24) oder dem Schneidenträger (26) und dem Spindelantrieb ermöglicht ist und eine Beanspruchung auf Druck erfolgt.

7. Werkzeugspannsystem nach einem der vorhergehenden Ansprüche, **dadurch gekennzeichnet, dass** das mindestens eine Piezoelement (14, 16, 28, 29) mit mindestens einer Induktivität (L) und vorzugsweise mindestens einem Kondensator (C) derart miteinander verschaltet ist, dass sich ein Schwingkreis ergibt, wobei die Frequenz des Schwingkreises vorzugsweise an die Frequenz der Hauptschwingungen des Werkzeugspannsystems (20) angepasst ist, und wobei vorzugsweise die Phasenlage des Schwingkreises mittels eines Verzögerungsgliedes, etwa in Form eines Kondensators (C), derart ausgelegt ist, dass sich zwischen der mechanischen Schwingung und der Frequenz des Schwingkreises eine Phasenverschiebung von etwa 180° ergibt.

8. Werkzeugspannsystem nach Anspruch 7, **dadurch gekennzeichnet, dass** eine Mehrzahl von Piezoelementen (14, 16, 28, 29) parallel miteinander verschaltet sind, wobei die Anordnung der Piezoelemente (14, 16, 28, 29) am Werkzeug (10) vorzugsweise so getroffen ist, dass an den Aufnahmepunkten der Piezoelemente (14, 16, 28, 29) keine Phasenverschiebungen der Hauptschwingungen des Werkzeugspannsystems (20) auftreten.

9. Werkzeugspannsystem nach einem der vorhergehenden Ansprüche, **dadurch gekennzeichnet, dass** eine Mehrzahl von Piezoelementen (14, 16, 28, 29) seriell miteinander verschaltet sind, wobei die Anordnung der Piezoelemente (14, 16, 28, 29) am Werkzeug (10) vorzugsweise so getroffen ist, dass an den Aufnahmepunkten der Piezoelemente (14, 16, 28, 29) keine Phasenverschiebungen der Hauptschwingungen des Werkzeugspannsystems (20) auftreten.

10. Werkzeugspannsystem nach Anspruch 9, **dadurch gekennzeichnet dass** eine Ausgangsspannung der Schaltung mittels eines Spannungswandlers (44) auf eine niedrigere Ausgangsspannung, vorzugsweise von höchstens 50 V, reduziert wird.

11. Werkzeugspannsystem nach einem der Ansprüche der vorhergehenden Ansprüche, **dadurch gekennzeichnet, dass** Multilayerpiezoelemente in Form von Parallelschaltungen mit anderen Multilayerelementen seriell verschaltet sind, die an unterschiedlichen Positionen des Werkzeugs (10) angeordnet sind, wobei vorzugsweise das Ausgangssignal des mindestens einen Piezoelementes (14, 16, 28, 29) einer Einrichtung zur Spannungsaufbereitung (44) zugeführt ist, die eine Einrichtung zur Erzeugung eines HF-Trägersignals (46) speist, das mit einem Modulator (48) zur Modulierung des HF-Trägersignals mit einem Nutzsignal gekoppelt ist.

12. Werkzeugspannsystem nach Anspruch 11, **dadurch gekennzeichnet, dass** als Nutzsignal das Ausgangssignal des mindestens einen Piezoelements (14, 16, 28) verwendet wird.

13. Werkzeugspannsystem nach Anspruch 11, **dadurch gekennzeichnet, dass** eine Sensoreinrichtung (52) im Werkzeug (10) aufgenommen ist, die von der Einrichtung (44) zur Spannungsaufbereitung gespeist wird, und deren Ausgangssignal vorzugsweise dem Modulator (48) als Nutzsignal zugeführt ist.

14. Werkzeugspannsystem nach einem der Ansprüche 11 bis 13, **dadurch gekennzeichnet, dass** der Modulator (48) zur drahtlosen Übertragung des modulierten HF-Trägersignals an eine stationäre Auswerteeinheit (54) mit einer Sendeeinrichtung (50) gekoppelt ist, wobei vorzugsweise eine Ausgangsspannung der verschalteten Piezoelemente (14, 16, 28, 29) einer Einrichtung zur Spannungsaufbereitung zugeführt ist, die vorzugsweise mindestens einen Kondensator (C), und vorzugsweise eine Einrichtung zur Spannungsstabilisierung, etwa in Form einer Zenerdiode (Z), aufweist, wobei vorzugsweise die geglättete und vorzugsweise stabilisierte Ausgangsspannung der verschalteten Piezoelemente einer Sensoreinrichtung (52) zur Überwachung eines Betriebsparameters des Werkzeugspannsystems (20) zugeführt ist.

15. Werkzeugspannsystem nach Anspruch 14, **dadurch gekennzeichnet, dass** die Sensoreinrichtung (52) im Werkzeug integriert ist und mit einer Einrichtung (34; 48, 50) zur drahtlosen Übertragung eines Signals an eine stationäre Auswerteschaltung (54) gekoppelt ist, oder dass das Werkzeug (10) mit dem Werkzeughalter (22) über eine elektrische Schnittstelle (38) zur Übertragung eines elektrischen Signals gekoppelt ist.

## Claims

1. Tool clamping system comprising a rotationally drivable tool holder (22) for clamping a tool (10), a device (14, 16, 28, 29) for generating electrical energy from mechanical or thermal energy of the tool clamping system (20), comprising at least one piezo element (14, 16, 28, 29) for generating a voltage from mechanical vibration energy of the rotating tool clamping system (20), **characterized in that** the output signal of the at least one piezo element (14, 16, 28, 29) is used as a sensor signal for monitoring an operating parameter of the tool clamping system (20).

2. Tool clamping system according to claim 1, **characterized in that** the at least one piezo element (14, 16, 28, 29) is arranged in the tool in a region between a cutting edge (24) or a cutting edge support (26) and a shaft (19) of the tool (10).

3. Tool clamping system according to claim 1 or 2, **characterized in that** the at least one piezo element (14, 16, 28, 29) is designed for the generation of a voltage from mechanical vibration energy of the tool clamping system (20), in particular in the form of periodically modified torsion of the tool (10).

4. Tool clamping system according to one of the preceding claims, **characterized in that** the at least one piezo element (14, 16, 28, 29) is integrated in the tool (10) in such a way that a torsion loading of the tool leads to a pressure loading of the at least one piezo element (14, 16, 28, 29).

5. Tool clamping system according to one of the preceding claims, **characterized in that** the tool (10) has a movable interface (12), in particular in the form of a flexure bearing, between the cutting edge (24) or the cutting edge support (26) and the tool shaft (19), in which the at least one piezo element (14, 16, 28, 29) is integrated in such a way that a pressure loading is produced.

6. Tool clamping system according to claim 4 or 5, **characterized in that** the at least one piezo element (14, 16, 28, 29) is received in the tool shaft (19), wherein the integration of the piezo element (14, 16, 28, 29) in the flow of forces between the cutting edge (24) or the cutting edge support (26) and the spindle drive is made possible by at least one slot (17) in the tool shaft (19) and a pressure loading is produced.

7. Tool camping system according to one of the preceding claims, **characterized in that** the at least one piezo element (14, 16, 28, 29) is connected to at least one inductor (L) and preferably at least one capacitor (C) in such a way that a resonant circuit is generated, wherein preferably the frequency of the resonant circuit is adapted to the frequency of the primary vibrations of the tool clamping system (20), and wherein preferably the phase position of the resonant circuit is designed by means of a delay member, for example in the form of a capacitor (C), in such a way that a phase shift of approximately 180° is produced between the mechanical vibration and the frequency of the resonant circuit.

8. Tool clamping system according to claim 7, **characterized in that** a plurality of piezo elements (14, 16, 28, 29) are interconnected in parallel, wherein the arrangement of the piezo elements (14, 16, 28, 29) on the tool (10) is preferably such that there are no phase shifts of the primary vibrations of the tool clamping system (20) at the receiving points of the piezo elements (14, 16, 28, 29).

9. Tool clamping system according to one of the preceding claims, **characterized in that** a plurality of piezo elements (14, 16, 28, 29) are interconnected in series, wherein the arrangement of the piezo elements (14, 16, 28, 29) on the tool (10) is preferably such that there are no phase shifts of the primary vibrations of the tool clamping system (20) at the receiving points of the piezo elements (14, 16, 28, 29).

10. Tool clamping system according to claim 9, **characterized in that** the circuit is reduced by means of a voltage converter (44) to a lower output voltage, preferably of at most 50 V.

11. Tool clamping system according to one of the preceding claims, **characterized in that** multi-layer piezo elements in the form of parallel circuits are connected in series to other multi-layer elements, which are arranged at different positions of the tool (10), wherein preferably the output signal of the at least one piezo element (14, 16, 28, 29) is fed to a device for voltage conditioning (44), which feeds a device for generating an RF carrier signal (46) that is coupled to a modulator (48) for modulating the RF carrier signal with a useful signal.

12. Tool clamping system according to claim 11, **characterized in that** the output signal of the at least one piezo element (14, 16, 28, 29) is used as useful signal.

13. Tool clamping system according to claim 11, **characterized in that** a sensor device (52) is received in the tool (10), which sensor device is fed by the device (44) for voltage conditioning and of which the output signal is fed preferably to the modulator (48) as useful signal.

14. Tool clamping system according to any of claims 11 to 13, **characterized in that** the modulator (48) is coupled to a transmitting device (50) for the wireless transfer of the modulated RF carrier signal to a stationary evaluation unit (54), wherein preferably an output voltage of the connected piezo elements (14, 16, 28, 29) is fed to a device for voltage conditioning, which preferably has at least one capacitor (C) and preferably a device for voltage stabilization, for example in the form of a Zener diode (Z), wherein preferably the smoothed and preferably stabilized output voltage of the connected piezo elements is fed to a sensor device (52) for monitoring an operating parameter of the tool clamping system (20).

15. Tool clamping system according to claim 14, **characterized in that** the sensor device (52) is integrated in the tool and is coupled to a device (34; 48, 50) for the wireless transfer of a signal to a stationary evaluation circuit (54), or **in that** the tool (10) is coupled to the tool holder (22) via an electric interface (38) for the transfer of an electric signal.

## Revendications

1. Système de serrage d'outil comprenant un porte-outil (22) pouvant être entraîné en rotation et destiné à serrer un outil (10), comprenant un dispositif (14, 16, 28, 29) destiné à générer de l'énergie électrique à partir de l'énergie mécanique ou thermique du système de serrage d'outil (20), lequel possède au moins un élément piézoélectrique (14,16, 28, 29) destiné à générer une tension à partir de l'énergie oscillatoire mécanique du système de serrage d'outil (20) en rotation, **caractérisé en ce que** le signal de sortie de l'au moins un élément piézoélectrique (14, 16, 28, 29) est utilisé comme signal de capteur pour la surveillance d'un paramètre de fonctionnement du système de serrage d'outil (20).

2. Système de serrage d'outil selon la revendication 1, **caractérisé en ce que** l'au moins un élément piézoélectrique (14, 16, 28, 29) est disposé dans l'outil dans une zone entre une lame (24) ou un porte-lame (26) et une queue (19) de l'outil (10).

3. Système de serrage d'outil selon la revendication 1 ou 2, **caractérisé en ce que** l'au moins un élément piézoélectrique (14, 16, 28, 29) est configuré pour générer une tension à partir de l'énergie oscillatoire mécanique du système de serrage d'outil (20), notamment sous la forme d'une torsion variant périodiquement de l'outil (10).

4. Système de serrage d'outil selon l'une des revendications précédentes, **caractérisé en ce que** l'au moins un élément piézoélectrique (14, 16, 28, 29) est intégré dans l'outil (10) de telle sorte qu'une contrainte de torsion de l'outil donne lieu à une contrainte de pression de l'au moins un élément piézoélectrique (14, 16, 28, 29).

5. Système de serrage d'outil selon l'une des revendications précédentes, **caractérisé en ce que** l'outil (10) possède une interface mobile (12), notamment sous la forme d'une articulation à corps solide entre la lame (24) ou le porte-lame (26) et la queue d'outil (19), dans laquelle l'au moins un élément piézoélectrique (14, 16, 28, 29) est intégré de telle sorte qu'il se produit une contrainte de pression.

6. Système de serrage d'outil selon la revendication 4 ou 5, **caractérisé en ce que** l'au moins un élément piézoélectrique (14, 16, 28, 29) est logé dans la queue d'outil (19), au moins une fente (17) dans la queue d'outil (19) rendant possible l'intégration des éléments piézoélectriques (14, 16, 28, 29) dans le flux de force entre la lame (24) ou le porte-lame (26) et le mécanisme d'entraînement de broche, et une contrainte de pression s'effectuant par celle-ci.

7. Système de serrage d'outil selon l'une des revendications précédentes, **caractérisé en ce que** l'au moins un élément piézoélectrique (14, 16, 28, 29) est interconnecté avec au moins une inductance (L) et de préférence au moins un condensateur (C) de telle sorte qu'il en résulte un circuit oscillant, la fréquence du circuit oscillant étant de préférence adaptée à la fréquence des oscillations principales du système de serrage d'outil (20), et la position de phase du circuit oscillant étant de préférence conçue au moyen d'un composant de retard, par exemple sous la forme d'un condensateur (C), de telle sorte qu'il se produit un déphasage d'environ 180° entre l'oscillation mécanique et la fréquence du circuit oscillant.

8. Système de serrage d'outil selon la revendication 7, **caractérisé en ce qu'**une pluralité d'éléments piézoélectriques (14, 16, 28, 29) sont interconnectés entre eux en parallèle, l'arrangement des éléments piézoélectriques (14, 16, 28, 29) au niveau de l'outil (10) étant de préférence adopté de telle sorte qu'aucun déphasage des oscillations principales du système de serrage d'outil (20) ne se produit au niveau des points d'accueil des éléments piézoélectriques (14, 16, 28, 29).

9. Système de serrage d'outil selon l'une des revendications précédentes, **caractérisé en ce qu'**une pluralité d'éléments piézoélectriques (14, 16, 28, 29) sont interconnectés entre eux en série, l'arrangement des éléments piézoélectriques (14, 16, 28, 29) au niveau de l'outil (10) étant de préférence adopté de telle sorte qu'aucun déphasage des oscillations principales du système de serrage d'outil (20) ne se produit au niveau des points d'accueil des éléments piézoélectriques (14, 16, 28, 29).

10. Système de serrage d'outil selon la revendication 9, **caractérisé en ce qu'**une tension de sortie du circuit est réduite au moyen d'un convertisseur de tension (44) à une tension de sortie plus basse, de préférence au maximum de 50 V.

11. Système de serrage d'outil selon l'une des revendications des revendications précédentes, **caractérisé en ce que** des éléments piézoélectriques multicouches sous la forme de circuits parallèles sont interconnectés en série avec d'autres éléments multicouches, lesquels sont disposés à des positions différentes de l'outil (10), le signal de sortie de l'au moins un élément piézoélectrique (14, 16, 28, 29) étant acheminé à un dispositif de conditionnement de tension (44), lequel alimente un dispositif destiné à générer un signal porteur HF (46) qui est couplé avec un signal utile par un modulateur (48) destiné à moduler le signal porteur HF.

12. Système de serrage d'outil selon la revendication 11, **caractérisé en ce que** le signal utile utilisé est le signal de sortie de l'au moins un élément piézoélectrique (14, 16, 28).

13. Système de serrage d'outil selon la revendication 11, **caractérisé en ce qu'**un dispositif capteur (52) est logé dans l'outil (10), lequel est alimenté par le dispositif (44) de conditionnement de tension, et son signal de sortie est de préférence acheminé en tant que signal utile au modulateur (48).

14. Système de serrage d'outil selon l'une des revendications 11 à 13, **caractérisé en ce que** le modulateur (48), en vue de la transmission sans fil du signal porteur HF modulé, est connecté à une unité d'interprétation (54) fixe munie d'un dispositif d'émission (50), une tension de sortie des éléments piézoélectriques (14, 16, 28, 29) interconnectés étant de préférence acheminée à un dispositif de conditionnement de tension, lequel possède de préférence au moins un condensateur (C), et de préférence un dispositif de stabilisation de tension, par exemple sous la forme d'une diode zener (Z), la tension de sortie lissée et de préférence stabilisée des éléments piézoélectriques interconnectés étant de préférence acheminée à un dispositif capteur (52) destiné à surveiller un paramètre de fonctionnement du système de serrage d'outil (20).

15. Système de serrage d'outil selon la revendication 14, **caractérisé en ce que** le dispositif capteur (52) est intégré dans l'outil et connecté par un dispositif (34 ; 48, 50) destiné à la transmission sans fil d'un signal à un circuit d'interprétation (54) fixe, ou **en ce que** l'outil (10) est connecté au porte-outil (22) par le biais d'une interface électrique (38) destinée à la transmission d'un signal électrique.
